**Europäisches Patentamt**

**European Patent Office**

**Office européen des brevets**

(19)

(11) Publication number : **0 332 182 B1**

(12)

# EUROPEAN PATENT SPECIFICATION

(45) Date of publication of patent specification :
**03.06.92 Bulletin 92/23**

(51) Int. Cl.⁵ : **C02F 3/20, B01F 5/04, C02F 3/12**

(21) Application number : **89104146.9**

(22) Date of filing : **09.03.89**

(54) Method and apparatus for forming small bubbles in liquid.

(30) Priority : **10.03.88 FI 881132**

(43) Date of publication of application :
**13.09.89 Bulletin 89/37**

(45) Publication of the grant of the patent :
**03.06.92 Bulletin 92/23**

(84) Designated Contracting States :
**AT DE FR GB IT SE**

(56) References cited :
**WO-A-86/02577**
**DE-A- 3 603 466**
**FR-A- 2 397 870**
**GB-A- 1 521 785**

(73) Proprietor : **OUTOKUMPU OY**
**Töölönkatu 4**
**SF-00100 Helsinki 10 (FI)**

(72) Inventor : **Andersson, Arvo Einari**
**Espoo, Finland Vilpunkatu 2 D 22**
**SF-02230 Espoo (FI)**
Inventor : **Kivistö, Tuomo Veikko Juhani**
**Kirkkonummi, Finland Myllyniitty**
**SF-02420 Jorvas (FI)**
Inventor : **Leiponen, Matti Olavi**
**Espoo, Finland Kivitie 23**
**SF-02240 Espoo (FI)**

(74) Representative : **Zipse + Habersack**
**Kemnatenstrasse 49**
**W-8000 München 19 (DE)**

EP 0 332 182 B1

Jouve, 18, rue Saint-Denis, 75001 PARIS

## Description

The present invention relates to a method and apparatus for forming small gas bubbles in liquid, and in the creation of efficient material transfer between gas and liquid in large tanks or basins. Part of the liquid is made to flow through a stationary aerator unit, where a pumping member gives kinetic energy to the liquid flowing in the flow channel, and simultaneously gas is fed in the liquid through small apertures (less than 2 mm) or through a porous surface provided at the bottom of the flow channel subsequently after the pumping member.

It is known in the prior art that the efficiency of the oxygen transfer of any gas, such as air, to be fed in a liquid, for instance wastewater or concentration sludge, is remarkably increased when the bubble size is reduced. For example, a decrease of the bubble diameter from 4 mm to 2 mm roughly doubles the amount of oxygen dissolved from the same amount of air. This means that the capacity of the gas supply equipment is doubled, and the energy efficiency is increased by 30-50%.

In the prior art there is known the US patent publication 4,066,722 where the gas injected in liquid is attempted to break into small bubbles by means of a rotatable bell. In order to feed and mix the gas into liquid, in the bottom part of the aerator tank there is installed a hollow bell rotating around its axis, and coaxially above the bell there is provided a mixer. The rotating bell and the mixer make the liquid flow along the outside surface of the bell, and gas is fed in the liquid from inside the bell through the apertures provided on the bell surface. The gas supplied from inside the bell is sparged in the liquid in relatively small bubbles. In order to give the liquid sufficient kinetic energy, so that the oxidized liquid should flow further away from the bell and new, unoxidized liquid could be made to flow along the bell surface, comparatively high power is required in the rotation of the bell and the mixer. Thus the rotating bell is not an economical arrangement. On the other hand, the same patent publication also mentions an experiment where the same bell was used as a stationary installation, in which case the oxygen transfer readings collapsed. The experiments carried out during our examinations confirm the fact.

The present invention relates to a method for conducting the liquid under treatment and contained for instance in a tank into a stationary flow channel comprising a pumping member. The gas is fed into the liquid flowing in the flow channel through small apertures - less than 2 mm - provided in the bottom part of the flow channel, or through a porous surface, so that the flowing liquid cuts the gas injected through the apertures into small bubbles. The flow channel is provided with a cover, which extends over the point of gas supply. The invention also relates to an apparatus for realizing the method. The essential novel features are apparent from the appended claims.

When aiming at an efficient material transfer, the small bubble size alone is often not enough, but - particularly in large liquid tanks - the delay time of the bubbles in the liquid is another very important factor. In large tanks, there easily arises a so-called air-lift phenomenon, which means that the gas bubbles rise rapidly up to the surface in the vicinity of the bubble generator. Consequently the delay time of the gas bubbles in the liquid is shortened, and the material transfer is drastically declined. The purpose of the method and apparatus of the present invention is to create as small bubbles as possible with as low energy consumption as possible, and to move the resulting gas-liquid mixture sufficiently far and distribute it in a sufficiently large area in order to attenuate the air-lift phenomenon. Accordingly, it is essential for the cover part of the flow channel of the aerator of the present invention, that - opposite to the apparatus of the US patent 4,066,722, for instance - the flow channel always comprises a stationary top part, which is extended over the point of gas supply. Thus it can always be secured that the gas bubbles do not rise directly up through the liquid, but flow sideways along with the liquid and are simultaneously mixed therein. The cover also enables the creation of essentially smaller bubbles (0.5 - 3 mm) than could be possible without the cover.

In the currently used wastewater aerating units, the oxidizing efficiency E in standard conditions into pure water varies within the range of 2.0 - 2.5 kg $O_2$/kWh. By employing so-called fine-bubble aerators, even remarkably higher readings are achieved in suitable test conditions, but on one hand blinding and slime formation in the porous plates or the like, and on the other hand the special requirements of the process in question, for instance special demands for mixing, result in a performance corresponding to the rate of 2.0 kg $O_2$/kWh in standard conditions. When applying the method of the present invention to forming gas bubbles with an average size of 3 mm, the E rate rises up to the range of 2.4 - 2.8 kg $O_2$/kWh, and with an average bubble size of 2 mm, the obtained E rate is over 3.0 kg $O_2$/kWh, which means remarkable savings in energy, when the suitability of the method and the apparatus in industrial-scale conditions is also taken into account.

The invention is further described with reference to the appended drawings, where

figure 1 is an illustration in principle of the realization of the method of the invention,

figure 2 is an illustration in principle of the realization of another method of the invention,

figure 3 is a top-view illustration of the embodiments of figures 1 and 2, when the aerator is completely of the same shape as the revolving body,

figures 4 and 5 are top-view illustrations of the embodiments of figures 1 and 2, when the aerator unit is partly formed of several pipes,

figure 6 is an illustration of an aerator unit where the flow channel is turned less than 90°,

figure 7 illustrates an aerator unit where the liquid enters the aerator unit from below, and

figure 8 illustrates an aerator unit where the flow channel, in the area of the pumping member, is annular in cross-section.

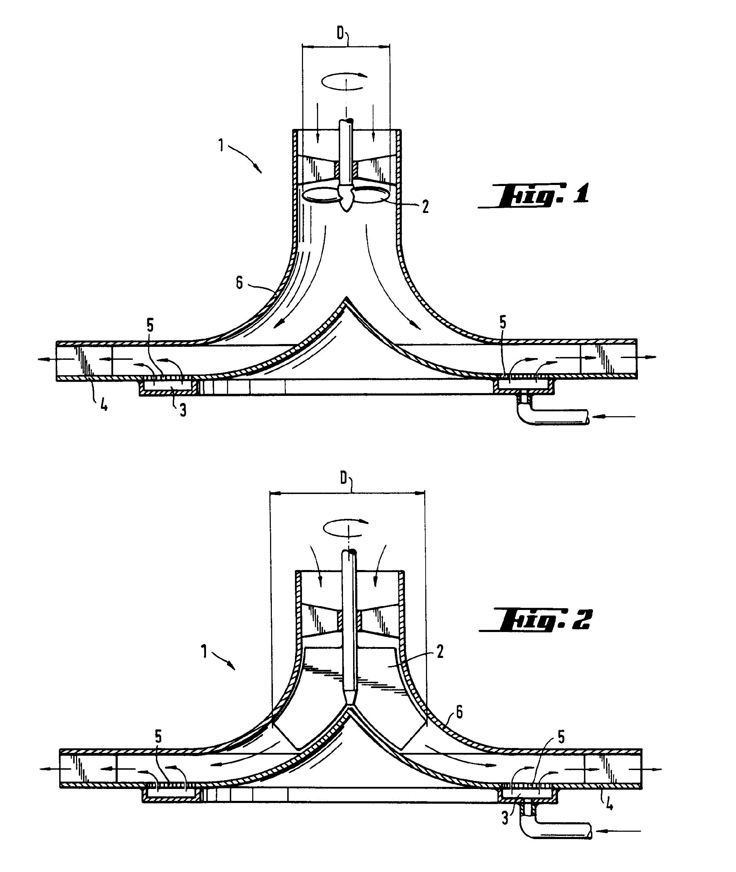

As is seen from the schematical illustration of figure 1, the aerator unit 1 is open at the top so that the surrounding tank liquid can flow from around the axis of the pumping member 2, fitted inside the aerator unit and pressing the flow downwards, into the aerator unit. It is naturally clear that an actuator unit of this pumping member can be installed above the aerator unit, although the drawing does not include a detailed description thereof. The diameter of the propeller of the pumping member 2 is indicated by the letter D. From the gas supply unit 3 from below, gas is conducted into the aerator unit through small apertures arranged in the bottom part 4 of the aerator unit and having a diameter of less than 2 mm, or through a porous surface 5. The fact is that when arranged in a suitable fashion, small apertures form a porous surface. The apparatus includes a cover 6, its diameter being at least 2D, and gas inlet openings in an area which is located below the cover so that the cover part is extended after the gas inlet openings for a given length which is at least half of the diameter of the pumping member (i.e. $\frac{1}{2}$D), which means that at this point the flow channel is closed towards the top. The cover and bottom parts of the aerator unit are so designed that the flow channel is first vertical in direction but curves flexibly to the side at least 30°, often about 90°, so that the aerated liquid is discharged from the aerator until in a more or less horizontal direction.

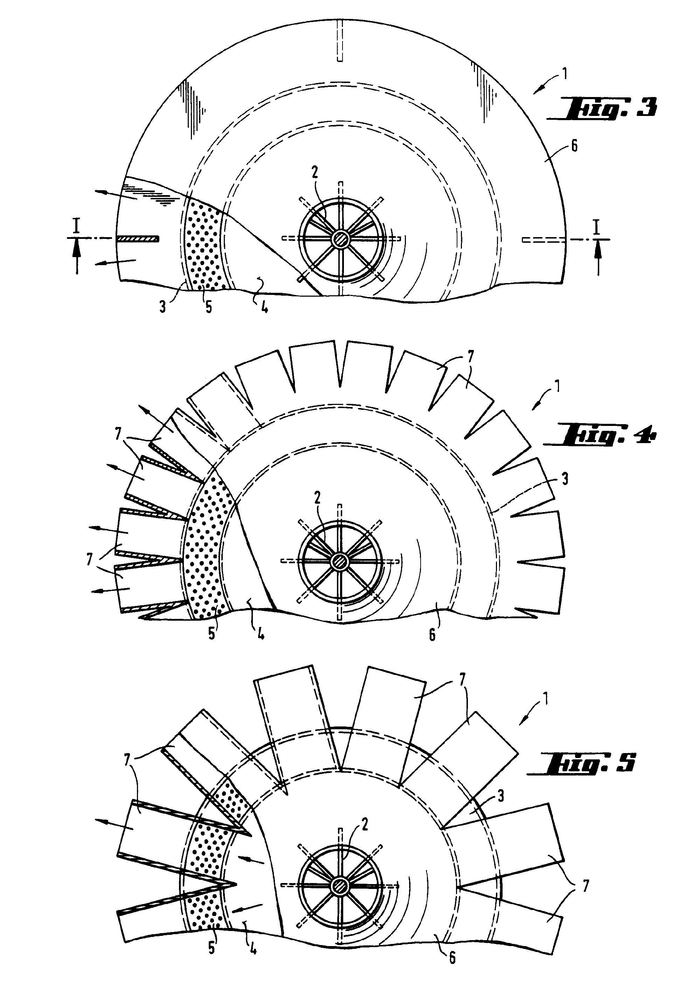

In the cases of figures 1 and 2, the cover 6 or the aerator unit is uniform throughout its casing and equal in shape with the revolving body. In the aerator unit of figure 2, the structures have been made lower by making use of the partly sideways directing pumping member. Figure 3 illustrates the embodiments of figures 1 and 2 when seen from the top.

In the cases of figure 4 and 5, both the bottom and the cover part of the aerator unit are first uniform from the pumping member axis onwards, but are further divided into several separate parts, and together these cover and bottom part form separate pipes 7. Thus the liquid flow is divided into several separate partial flows, which flow radially into different directions. Gas can be fed in either onto the uniform part of the aerator unit, before dividing the liquid flow into partial flows, as is illustrated in figures 1-4, or gas can be fed to the starting point of the separate pipes 7, i.e. separately to each partial flow, as is seen in figure 5.

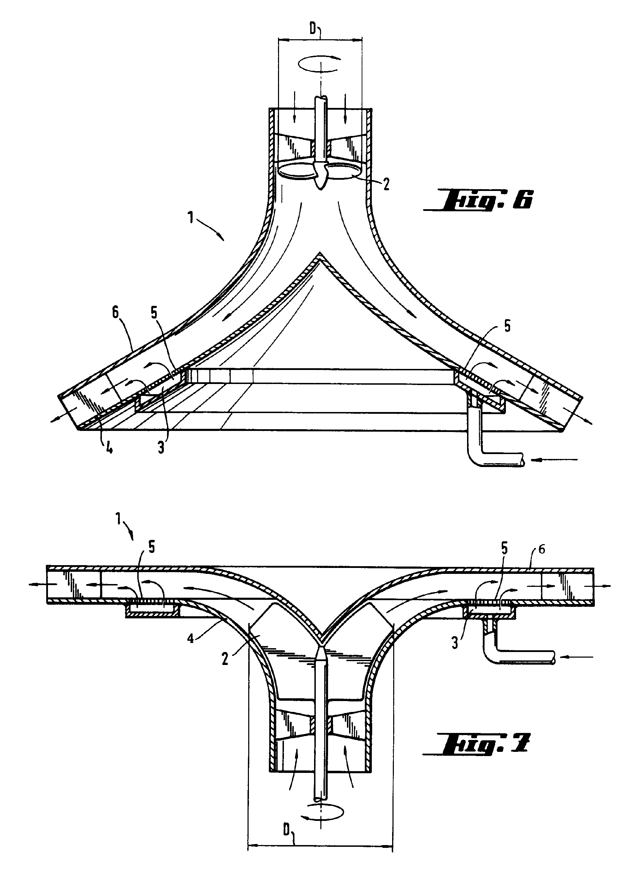

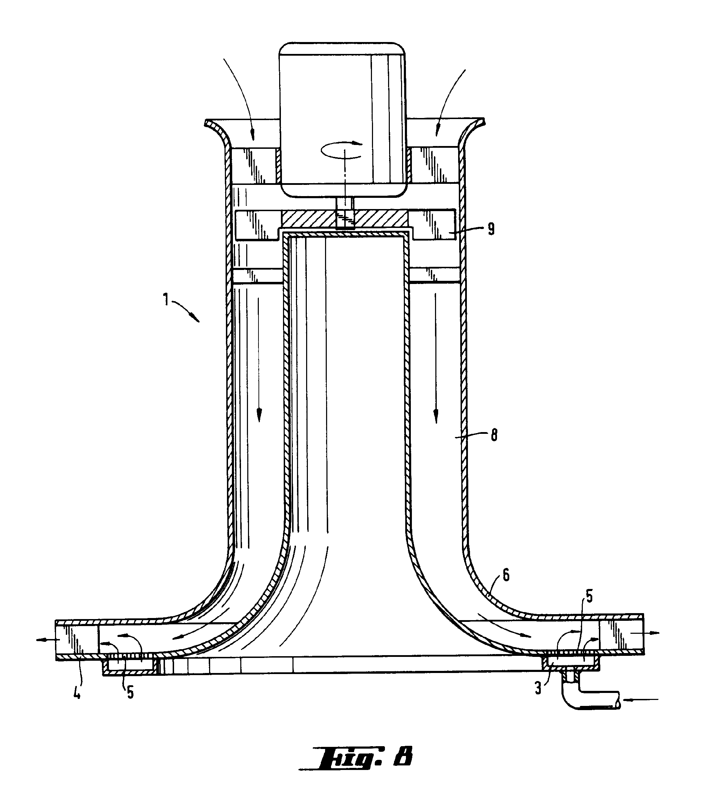

Figure 6 introduces an aerator unit where the flow channel is turned at least 30°, but clearly less than 90°. In the case of figure 7, the aerator unit is stationary at the top, and the liquid is conducted into the pumping unit from below the aerator unit.

Figure 8 illustrates an embodiment which is one of the most advantageous as for the technical point of view. The flow channel 8 is annular in cross-section, and the pumping member 9 is correspondingly designed so as to match this arrangement. The gas supply into the liquid is still carried out in the bottom part of the apparatus.

As is apparent from the above drawings and specification, it is an essential feature of the embodiments of the aerator unit according to the present invention that by means of them, a large liquid volume can be made to proceed with a small energy, because the created back pressure is low. In the majority of the cases, the most advantageous device for setting liquid into motion is a propeller pump. By thus setting the liquid into motion, and by simultaneously shifting the flow direction by means of reshaping the aerator unit, so that the peak of the liquid velocity profile is achieved near the flow channel wall, the gas supply into the liquid can be made as efficient as possible by adjusting the point of supply to fall within the said peak of the liquid velocity profile. Generally the flow is turned in the flow channel about 90°, but always at least 30°.

Moreover, it is essential of the apparatus of the present invention that the apparatus itself is stationary, that it comprises a pumping member which gives motional energy to the liquid, and that it is provided with a cover part which extends over the point of gas supply. The most advantageous pump and flow channel combination is formed of a pump duct which is annular in cross-section, illustrated in figure 8. The shape of the flow channel at the point of gas supply may vary, and it may also be other than round or elliptical in cross-section, for instance a polygon.

**Claims**

1. Method for forming small bubbles in liquid, wherein liquid contained in a tank is conducted into a stationary flow channel provided with a pumping member, which flow channel is at least partly formed of a revolving body, and where the liquid flow is flexibly turned at least 30° sideways; gas is fed into the liquid through small apertures with a diamter of less than 2 mm which are formed at the bottom of the flow channel subsequently after the pumping member; the flow channel extends in radial direction over the point of the gas supply for a length of at least half of the diameter of the pumping member; and the flowing liquid cuts the gas flow emerging through these apertures into small bubbles, generally of a size whithin the range of 0,5 - 3,0 mm, into a flow channel which is closed at the top.

2. The method of claim 1, **characterized** in that the flow channel is curved with respect to the vertical axis.

3. The method of claim 1, **characterized** in that the flow channel is annular in shape.

4. The method of claim 1, **characterized** in that the initially uniform liquid flow is divided into several separate partial flows.

5. The method of claims 1 and 2, **characterized** in that the liquid flow is divided into several separate partial flows after the point of gas supply.

6. The method of claims 1 and 4, **characterized** in that the liquid flow is divided into several separate partial flows prior to the point of gas supply, so that the gas is fed separately into each partial flow.

7. The method of claim 1, **characterized** in that the liquid flow direction in the flow channel is turned about 90°.

8. The apparatus for carrying out the method of claim 1, **characterized** in that the flow channel of the aerator unit (1) is formed of a
stationary cover part (6) which is at least partially of the same shape as the revolving body, as well as of a bottom part (4), and that inside the aerator unit there is fitted a pumping member (2, 9); that immediately outside the bottom part there is arranged a gas supply unit (3), wherefrom gas is made to flow through small apertures (5), with a diameter of 0.5 - 2 mm, provided on the bottom part surface, into the liquid flowing in the flow channel, and that the cover part (6) and the bottom part (4) extend, in the breadthwise direction, over the gas supply unit for a length which is at least half of the diameter of the pumping member (2, 9).

9. The apparatus of claim 8, **characterized** in that the cover part (6) is uniform throughout the casing of the aerator unit.

10. The apparatus of claim 9, **characterized** in that the initially uniform cover part (6) and the bottom part (4) are divided into several separate parts forming separate pipes (7).

11. The apparatus of claims 8 and 10, **characterized** in that the apertures (5) wherethrough gas is fed into the aerator unit are located within the area of the uniform bottom part (4).

12. The apparatus of claims 8 and 10, **characterized** in that the apertures (5) wherethrough gas is fed into the aerator unit are located at the beginning of the separate pipes (7).

13. The apparatus of claim 8, **characterized** in that the apertures (5) wherethrough gas is fed into the aerator unit form a porous surface.

14. The apparatus of claim 8, **characterized** in that the cover part (6) extends outwards from the pumping member axis over an area with a diameter at least twice the diameter of the propeller of the pumping member (2).

15. The apparatus of claim 8, **characterized** in that the pumping member (2) presses the flow downwards.

16. The apparatus of claim 8, **characterized** in that the pumping member (2) presses the flow obliquely sideways.

17. The apparatus of claim 8, **characterized** in that within the area of the pumping member (2), the flow channel (8) of the aerator unit is annular in shape.


**Patentansprüche**

1. Verfahren zur Bildung kleiner Blasen in Flüssigkeit, bei dem in einem Behälter enthaltene Flüssigkeit in einen ortsfesten Strömungskanal geleitet wird, der mit einem Pumpelement versehen ist und mindestens teilweise aus einem umlaufenden Körper gebildet ist, und wo die Flüssigkeitsströmung flexibel mindestens 30° seitlich gewendet wird; Gas durch kleine Öffnungen mit einem Durchmesser von weniger als 2 mm, die am Boden des Strömungskanals anschließend nach dem Pumpelement gebildet sind, in die Flüssigkeit eingespeist wird; der Strömungskanal sich in radialer Richtung über die Stelle der Gaszufuhr eine Strecke weit ausdehnt, die mindestens der Hälfte des Durchmessers des Pumpelements entspricht; und die strömende Flüssigkeit den durch diese Öffnungen austretenden Gasstrom in kleine Blasen, insgesamt von einer Größe innerhalb des Bereichs von 0,5 bis 3,0 mm schneidet, in einen Strömungskanal, der an der Oberseite geschlossen ist.

2. Verfahren nach Anspruch 1, dadurch gekennzeichnet, daß der Strömungskanal in bezug auf die vertikale Achse gekrümmt ist.

3. Verfahren nach Anspruch 1, dadurch gekennzeichnet, daß der Strömungskanal von ringförmiger Gestalt ist.

4. Verfahren nach Anspruch 1, dadurch gekennzeichnet, daß die anfangs gleichförmige Flüssigkeitsströmung in mehrere getrennte Teilströme unterteilt wird.

5. Verfahren nach Anspruch 1 und 2, dadurch gekennzeichnet, daß die Flüssigkeitsströmung nach der Stelle der Gaszufuhr in mehrere getrennte Teilströme unterteilt wird.

6. Verfahren nach Anspruch 1 und 4, dadurch gekennzeichnet, daß die Flüssigkeitsströmung vor der Stelle der Gaszufuhr in mehrere getrennte Teilströme unterteilt wird, so daß das Gas gesondert in jeden Teilstrom eingespeist wird.

7. Verfahren nach Anspruch 1, dadurch gekennzeichnet, daß die Flüssigkeitsströmungsrichtung im Strömungskanal um etwa 90° gewendet wird.

8. Vorrichtung zum Durchführen des Verfahrens gemäß Anspruch 1, dadurch gekennzeichnet, daß der Strömungskanal der Belüftungseinheit (1) aus einem ortsfesten Abdeckungsteil (6), der mindestens teilweise von gleicher Gestalt ist wie der umlaufende Körper und ebenso aus einem Bodenteil (4) gebildet ist, und daß innerhalb der Belüftungseinheit ein Pumpelement (2, 9) eingepaßt ist; daß unmittelbar außerhalb des Bodenteils eine Gaszufuhreinheit (3) angeordnet ist, von der aus Gas veranlaßt wird, durch kleine Öffnungen (5) mit einem Durchmesser von 0,5 bis 2 mm, die an der Bodenteiloberfläche vorgesehen sind, in die im Strömungskanal fließende Flüssigkeit zu strömen, und daß der Abdeckungsteil (6) und der Bodenteil (4) sich in Richtung der Breite über die Gaszufuhreinheit ein Stück weit erstrecken, welches mindestens der Hälfte des Durchmessers des Pumpelements (2, 9) entspricht.

9. Vorrichtung nach Anspruch 8, dadurch gekennzeichnet, daß der Abdeckungsteil (6) über das ganze Gehäuse der Belüftungseinheit hinweg gleichförmig ist.

10. Vorrichtung nach Anspruch 9, dadurch gekennzeichnet, daß der anfänglich gleichförmige Abdeckungsteil (6) und der Bodenteil (4) in mehrere getrennte Teile unterteilt sind, die getrennte Rohre (7) bilden.

11. Vorrichtung nach Anspruch 8 und 10, dadurch gekennzeichnet, daß sich die Öffnungen (5), durch die Gas in die Belüftungseinheit eingeführt wird, innerhalb des Bereichs des gleichförmigen Bodenteils (4) befinden.

12. Vorrichtung nach Anspruch 8 und 10, dadurch gekennzeichnet, daß sich die Öffnungen (5), durch die Gas in die Belüftungseinheit eingeführt wird, am Beginn der getrennten Rohre (7) befinden.

13. Vorrichtung nach Aspruch 8 dadurch gekennzeichnet, daß die Öffnungen (5), durch die Gas in die Belüftungseinheit eingeführt wird, eine poröse Oberfläche bilden.

14. Vorrichtung nach Anspruch 8, dadurch gekennzeichnet, daß der Abdeckungsteil (6) sich von der Achse des Pumpelements nach außen über einen Bereich mit einem Durchmesser erstreckt, der mindestens zweimal so grob ist wie der Durchmesser des Laufrades des Pumpelements (2).

15. Vorrichtung nach Anspruch 8, dadurch gekennzeichnet, daß das Pumpelement (2) die Strömung nach unten drückt.

16. Vorrichtung nach Anspruch 8, dadurch gekennzeichnet, daß das Pumpelement (2) die Strömung schräg seitwärts drückt.

17. Vorrichtung nach Anspruch 8, dadurch gekennzeichnet, daß innerhalb des Bereichs des Pumpelements (2) der Strömungskanal (8) der Belüftungseinheit ringförmige Gestalt hat.

**Revendications**

1. Procédé de formation de petites bulles dans un liquide, dans lequel le liquide contenu dans un réservoir est amené dans un canal d'écoulement stationnaire pourvu d'un élément de pompage, lequel canal d'écoulement est formé au moins partiellement d'un corps rotatif, et où le flux de liquide est détourné de façon adaptable d'au moins 30° latéralement; du gaz est amené dans le liquide par des petites ouvertures ayant un diamètre de moins de 2 mm, qui sont formées à la base du canal d'écoulement après l'élément de pompage; le canal d'écoulement s'étend dans la direction radiale au-delà du point d'amenée de gaz, sur une longueur d'au moins la moitié du diamètre de l'élément de pompage; et le liquide s'écoulant coupe le flux de gaz sortant de ces ouvertures sous la forme de petites bulles, d'une dimension généralement comprise dans la plage de 0,5 à 3,0 mm, dans un canal d'écoulement qui est fermé à son sommet.

2. Procédé selon la revendication 1, caractérisé en ce que le canal d'écoulement est incurvé par rapport à l'axe vertical.

3. Procédé selon la revendication 1, caractérisé en ce que le canal d'écoulement est de forme annulaire.

4. Procédé selon la revendication 1, caractérisé en ce que le flux de liquide initialement homogène est divisé en plusieurs flux partiels séparés.

5. Procédé selon les revendications 1 et 2, caractérisé en ce que le flux de liquide est divisé en plusieurs flux partiels séparés au-delà du point d'amenée de gaz.

6. Procédé selon les revendications 1 et 4, caractérisé en ce que le flux de liquide est divisé en plusieurs flux partiels séparés à l'avant du point d'amenée de gaz, de sorte que le gaz est amené séparément dans chaque flux partiel.

7. Procédé selon la revendication 1, caractérisé en ce que la direction du flux de liquide dans le canal d'écoulement tourne d'environ 90°.

8. Appareil pour la mise en oeuvre du procédé selon la revendication 1, caractérisé en ce que le canal d'écoulement de l'unité aératrice (1) est formé d'une partie couvrante stationnaire (6) qui a au moins partiellement la même forme que le corps rotatif, ainsi que d'une partie de base (4), et qu'un élément de pompage (2 ; 9) est monté à l'intérieur de l'unité aératrice, qu'immédiatement à l'extérieur de la partie de base est disposée une unité d'amenée de gaz (3) à partir de laquelle un gaz s'écoule par des petites ouvertures (5) d'un diamètre de 0,5 à 2 mm, disposées à la surface de la partie de base, et pénètre dans le liquide s'écoulant dans le flux d'écoulement, et que la partie couvrante (6) et la partie de base (4) s'étendent, dans le sens de la largeur, au-delà de l'unité d'amenée de gaz, sur une longueur qui représente au moins la moitié du diamètre de l'élément de pompage (2 ; 9).

9. Appareil selon la revendication 8, caractérisé en ce que la partie couvrante (6) est homogène sur toute l'enveloppe de l'unité aératrice.

10. Appareil selon la revendication 9, caractérisé en ce que la partie couvrante (6) et la partie de base (4) initialement homogènes sont divisées en plusieurs parties séparées qui forment des conduites séparées (7).

11. Appareil selon les revendications 8 et 10, caractérisé en ce que les ouvertures (5) par lesquelles le gaz est amené dans l'unité aératrice sont situées à l'intérieur de la zone de la partie de base homogène (4).

12. Appareil selon les revendications 8 et 10, caractérisé en ce que les ouvertures (5) par lesquelles le gaz est amené dans l'unité aératrice sont situées au commencement des conduites (7).

13. Appareil selon la revendication 8, caractérisé en ce que les ouvertures (5) par lesquelles le gaz est amené dans l'unité aératrice forment une surface poreuse.

14. Appareil selon la revendication 8, caractérisé en ce que la partie couvrante (6) s'étend vers l'extérieur de l'axe de l'élément de pompage sur une zone d'un diamètre d'au moins deux fois le diamètre de l'hélice de l'élément de pompage (2).

15. Appareil selon la revendication 8, caractérisé en ce que l'élément de pompage (2) refoule le flux vers le bas.

16. Appareil selon la revendication 8, caractérisé en ce que l'élément de pompage (2) refoule le flux latéralement de façon oblique.

17. Appareil selon la revendication 8, caractérisé en ce que le canal d'écoulement (8) de l'unité aératrice est de forme annulaire à l'intérieur de la zone de l'élément de pompage (2).

Fig. 1

Fig. 2

*Fig. 3*

*Fig. 4*

*Fig. 5*

*Fig. 6*

*Fig. 7*

Fig. 8